# FASCICULE DE BREVET EUROPEEN

(11) **EP 0 552 573 B1**
(45) Date de publication et mention de la délivrance du brevet: **17.05.2000**
(21) Numéro de dépôt: 92400158.9
(22) Date de dépôt: 22.01.1992
(51) Int. Cl.: E04C 2/26, E04B 1/94, B32B 15/04

(54) **Panneau resistant au feu à base de fibres minérales**
Feuerfeste Mineralfaserplatte
Fire-resistant mineral fibre panel

(43) Date de publication de la demande: 28.07.1993
(73) Titulaire: ISOVER SAINT-GOBAIN, 92400 Courbevoie (FR)
(72) Inventeur: Zinzius, Roger, F-71640 Givry (FR)
(74) Mandataire: Le Vaguerese, Sylvain Jacques

(56) Documents cités:
- EP-A- 0 327 428
- EP-A- 0 501 271
- FR-A- 2 359 944
- FR-A- 2 413 971
- FR-A- 2 646 453
- US-A- 4 935 281

## Description

La présente invention concerne un panneau à base de fibres minérales, notamment de fibres de verre ou de roches dites d'isolation, ayant une excellente résistance au feu.

Pour l'isolation acoustique et thermique des bâtiments commerciaux, tertiaires et industriels, il est connu d'utiliser des panneaux relativement rigides généralement constitués par un matelas de fibres minérales liées par un liant organique. Sur l'une des faces du matelas est collé un revêtement pare-vapeur associé, éventuellement, à un parement d'aspect. Typiquement, ce revêtement est constitué par une feuille de papier kraft sur laquelle est collée, du côté extérieur, une feuille d'aluminium éventuellement laquée. Le papier kraft est collé au panneau au moyen d'une couche de colle. Un voile en fibres de verre est habituellement interposé entre le revêtement et le matelas de laine minérale. Ce voile est destiné à renforcer la rigidité du panneau et à lisser la face du matelas sur laquelle le revêtement est appliqué. Il facilite également le collage du revêtement, car sa porosité est plus faible que celle du matelas de laine minérale, ce qui permet d'éliminer les irrégularités de surface du matelas et de réduire les quantités de colle nécessaires pour fixer le pare-vapeur.

Le voile peut être obtenu par voie humide suivant une technique analogue à celle du papier, à partir de fibres de verte étirées mécaniquement en continu sous forme de fils coupés ou, par voie aérienne suivant un étirage aérodynamique. Avant l'application du revêtement sur la face à revêtir du matelas, celle-ci peut être lissée, par exemple par le procédé faisant l'objet de la demande de brevet n° 88 16895 du 21 décembre 1988 au nom de la Demanderesse (FR 2 640 546).

Pour améliorer la tenue mécanique des panneaux, il est connu de les reborder en rabattant le revêtement par pliage le long des arêtes longitudinales du matelas et en collant la partie rabattue sur la face non apparente ou arrière du panneau. Le rebordage peut être effectué conformément à l'enseignement de la demande de brevet n° 89 05581 du 27 avril 1989 au nom de la Demanderesse (FR 2 646 453). On donnera ci-après, à titre d'exemple, la composition d'un panneau revêtu connu, en partant de la face apparente à la face non visible :
- laque : 1,5 g/m²,
- feuille aluminium : 9 micromètres d'épaisseur,
- papier kraft : de l'ordre de 120 g/m²,
- colle entre papier kraft et feuille aluminium : 2 g/m²,
- colle polyéthylène sur papier kraft : 40 g/m²,
- voile de verre : 80 g/m²,
- laine de verre : de l'ordre de 25 kg/m³.

De tels panneaux sont classés, conformément à la réglementation incendie en vigueur, norme NF P92501, dans la classe M1. Leur combustion se caractérise, en particulier, par un dégagement d'une quantité de chaleur supérieure à 600 kcal par kilogramme de matière. La présence des produits combustibles que sont le papier kraft, la colle qui relie la feuille d'aluminium à ce dernier et le liant organique thermodurcissable qui est pulvérisé sur les fibres de verre lors de la fabrication du matelas, sont responsables de ce caractère 〈〈 combustible 〉〉 résiduel.

Dans la pratique, l'utilisation de produits classés en M1 est parfaitement adaptée et correspond à un très haut degré de sécurité. Cependant, l'existence d'une catégorie M0, encore plus résistante à la combustion, crée une demande de la part des maitres d'oeuvre que les producteurs de produits isolants s'efforcent de satisfaire.

Dans cet ordre d'idée, les inventeurs se sont donné pour but d'obtenir un produit à base de libres minérales revêtu analogue aux produits antérieurs, propre à satisfaire aux exigences indiquées précédemment et qui, de plus, offre encore une meilleure résistance à la combustion.

Le document FR-A-2 359 944 décrit un panneau avec un revêtement du type comprenant un voile en fibres de verre et une feuille d'aluminium d'épaisseur comprise entre 20 et 60 micromètres et dont l'aspect peut être gaufré.

La présente invention a pour objet un panneau isolant à base de fibres minérales, à haute sécurité vis-à-vis du feu, ou classé M0.

Le panneau selon l'invention est du type comprenant un matelas en fibres minérales et un revêtement collé sur au moins la face destinée à être apparente du matelas.

Selon l'invention, le revêtement comprend un voile en fibres de verre, tel qu'un voile de fibres textiles, collé à la face à revêtir du matelas, et une feuille d'aluminium liée au voile au moyen d'une couche de colle réactivable à la chaleur, l'épaisseur de la feuille d'aluminium étant comprise entre 20 et 150 µm.

L'absence de papier kraft dans le revêtement fait décroître sensiblement la chaleur dégagée à la combustion des panneaux considérés. L'absence de papier dans le revêtement a pour conséquence également d'affaiblir celui-ci. Il est nécessaire que ce revêtement puisse, d'une part, être appliqué sur le voile sans risque de déchirure. Il faut aussi que ce revêtement offre une résistance suffisante dans les usages qui sont faits de ces panneaux. Il faut, en particulier, qu'il résiste aux opérations de dépoussiérage ou de lavage qui peuvent être entrepris.

Pour ces raisons, il est préférable d'utiliser une feuille d'aluminium plus épaisse que dans la combinaison kraft-aluminium.

Par ailleurs, l'aspect des panneaux selon l'invention est lié à l'état de surface de la feuille d'aluminium. Quelles que soient les précautions prises, il n'est pas possible de prévenir les chocs, éraflures... qui conduisent à une déformation visible de la feuille d'aluminium. Pour minimiser l'effet de ces accidents inévitables sur l'état de surface, il est préférable d'utiliser une feuille 〈〈 gaufrée 〉〉, autrement dit une feuille dont la surface présente un motif répétitif, la profondeur du motif étant de l'ordre de quelques dixièmes de millimètres à quelques millimètres. Dans ces conditions, les "accidents" se confondent avec ces gaufrages et l'aspect général n'est pas sensiblement altére. Pour que le gaufrage de l'aluminium soit possible, il faut que la feuille présente également une certaine résistance. Pour partie, cette résistance est conférée dans les revêtements antérieurs par la feuille kraft associée à la feuille d'aluminium. Dans le mode de réalisation, l'absence de kraft conduit aussi à l'accroissement de l'épaisseur de la feuille d'aluminium utilisée.

Enfin, le revêtement participe à la rigidification des panneaux. Pour cette raison aussi, la suppression de la feuille kraft est avantageusement compensée par une augmentation de l'épaisseur de la feuille d'aluminium.

S'il est avantageux d'accroître l'épaisseur de la feuille d'aluminium, pour des raisons de coût, on doit se limiter à des épaisseurs raisonnables. Conformément à l'invention, on atteint un bon compromis en utilisant une feuille d'aluminium d'épaisseur comprise entre 20 et 150 micromètres. Cette gamme d'épaisseur est nettement supérieure à celle couramment en usage dans les panneaux traditionnels. Dans le cas d'une feuille gaufrée, l'épaisseur est comprise avantageusement entre 40 et 150 micromètres.

Le liant organique entrant dans la composition du matelas est un produit combustible. On améliore donc la sécurité au feu du panneau en réduisant la proportion de liant par rapport aux fibres minérales. On ne peut toute-fois descendre en dessous d'une certaine limite inférieure sans sacrifier à la résistance mécanique du panneau.

La résistance mécanique ne dépend pas uniquement du taux de liant. Nous avons déjà indiqué le rôle du voile renforcé par celui du revêtement. Il est aussi possible de renforcer encore le panneau en appliquant un voile sur la deuxième face. Cette solution est cependant relativement coûteuse et n'est préconisée que dans les modes de réalisation où une rigidité particulièrement élevée est recherchée. Elle peut également être mise en oeuvre pour compenser une moindre résistance du matelas de fibres consécutive à un abaissement du taux de liant très conséquent. Il s'agit, là encore, d'un choix qui permet d'abaisser la "combustibilité" des panneaux selon l'invention.

La structure des panneaux est encore dépendante des fibres qui composent les matelas isolants. Ordinairement, s'agissant de produits devant offrir une certaine tenue mécanique, il était d'usage de choisir des matelas constitués de fibres dont le diamètre moyen était de l'ordre de 5 à 6 micromètres. Ces fibres offrent, à l'évidence, une meilleure rigidité intrinsèque.

Selon l'invention, on préfère cependant choisir des fibres dont le diamètre moyen est plu petit et avantageusement de l'ordre de 3 à 4 micromètres. Un premier effet, à masse volumique égale, est d'améliorer la résistance thermique des feutres utilisés. Par exemple, pour une masse de 26 kg/m³, le gain de résistance thermique obtenu peut atteindre 2 à 10 %. Par ailleurs, l'abaissement du diamètre moyen des fibres et la diminution de la rigidité peuvent être compensés soit par l'usage d'un voile de renforcement sur la deuxième face, si cela est nécessaire, soit par un accroissement modéré de la masse volumique du feutre. Cette seconde solution est préférée, car elle n'entraîne qu'un faible accroissement du coût du produit et, par ailleurs, permet d'accroître encore la résistance thermique de l'ensemble.

On voit, selon l'invention, qu'une diminution du taux de liant peut conduire à des produits qui, non seulement offrent les mêmes caractéristiques mécaniques, mais encore améliorent les performances de l'isolation. Il faut remarquer encore, au point de vue du caractère "combustible", qu'un accroissement de la masse volumique du feutre de fibres de verre n'entraîne pas nécessairement un accroissement comparable en valeur absolue du liant présent. En d'autres termes, l'accroissement relatif de la masse de verre conduit encore à un abaissement, également relatif, du liant présent dans le produit et améliore son classement vis-à-vis des normes en matière de combustion.

Un bon compromis, selon l'invention, consiste à utiliser une proportion de 3 à 7 % de liant dans le feutre.

De même, il est préférable de réduire la proportion de colle entre feuille d'aluminium et voile à la quantité strictement nécessaire pour assurer le collage, par exemple entre 10 et 50 g au mètre carré de panneau.

La présence éventuelle d'un voile sur la seconde face permet, comme nous l'avons vu, d'améliorer la résistance du panneau. Ce voile permet aussi de réduire l'effet "abrasif" du feutre de fibres de verre sur les faces revêtues, que le revêtement soit constitué d'une feuille d'aluminium, ou plus encore lorsque l'aluminium est laqué. En l'absence d'un tel voile, on peut éviter cette abrasion en plaçant sur la face non apparente une feuille de matière protectrice, par exemple en papier kraft, qui prévient le contact entre les fibres et le revêtement. Dans ce cas, la feuille de papier sera faiblement adhérente au feutre de manière à pouvoir être retirée au moment de la pose. De cette façon, la présence temporaire de la feuille de papier n'accroît pas la "combustibilité" de l'ensemble.

Un mode de réalisation selon l'invention sera décrit à présent en détail en regard du dessin annexé dans lequel :

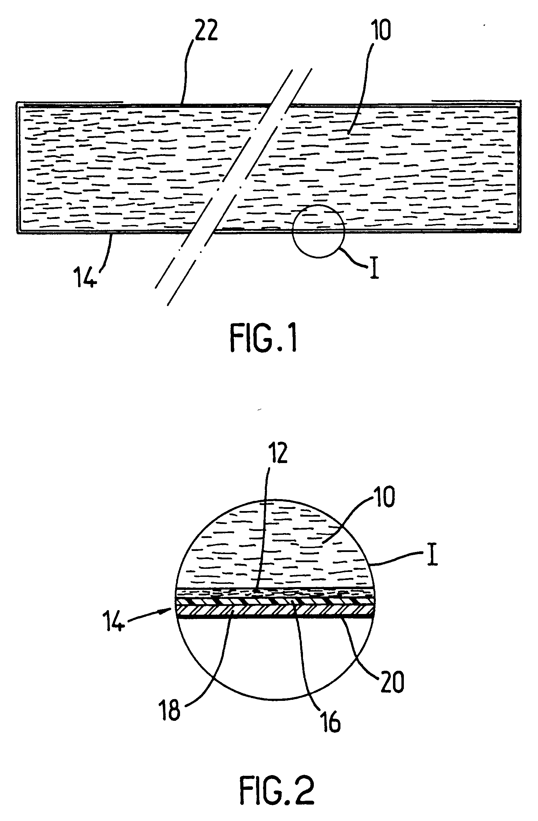

- la figure 1 est une vue, schématique en coupe, d'un panneau rebordé selon l'invention,
- la figure 2 est une vue, à plus grande échelle, du détail I de la figure 1.

Le panneau isolant selon l'invention est constitué, pour l'essentiel, d'un matelas 10 de laine minérale, par exemple en fibres de laine de verre ou de roche dites d'isolation, contenant un liant polymérisé. La densité du matelas 10 est comprise entre 15 et 80 kg/m³ pour une épaisseur comprise entre 10 et 100 mm, ce qui correspond à une gamme de produits classés rigides ou semi-rigides.

Selon une caractéristique de l'invention, la proportion de liant dans la laine est notablement réduite par rapport à celle intervenant dans les panneaux isolants en laine de fibres minérales traditionnels. Elle est comprise entre 3 et 7 % ce qui, comme on l'a expliqué précédemment, confère à la laine de fibres minérales à la fois une bonne résistance thermique et un bon comportement vis-à-vis du feu.

Sur la surface principale du panneau est collé un voile de fibres de verre 12 destiné à uniformiser la surface du matelas 10 en la lissant et en la rigidifiant, et un revêtement 14. Le voile en fibres de verre a un grammage compris entre 35 et 150 g/m² et une porosité inférieure à celle de la laine minérale, ce qui favorise la tenue au collage du revêtement.

Le revêtement 14 comprend, en allant de l'intérieur vers l'extérieur, une couche de colle 16 réactivable à la chaleur, par exemple en polyéthylène, dont le grammage est compris entre 10 et 50 g/m² et une feuille d'aluminium 18 d'épaisseur comprise entre 20 et 150 micromètres.

A des fins esthétiques, la feuille d'aluminium peut être enduite d'une couche de laque 20 capable de supporter la réactivation du polyéthylène, qui a lieu à une température de 200°C. Le grammage de la couche de laque est compris entre 0 et 3 g/m².

La face dorsale des panneaux peut recevoir aussi un voile 22 amiéliorant la rigidité. Ce voile est, éventuellement, revêtu également d'une feuille d'aluminium non représentée. En principe, un tel revêtement n'est pas nécessaire. Cette face n'est pas visible et l'aspect de surface est, en conséquence, indifférent. La présence de la feuille d'aluminium n'est pas non plus nécessaire à l'effet pare-vapeur qui est déjà obtenu par la feuille revêt ant la première face. Néanmoins, la présence de la feuille d'aluminium permet d'améliorer la présentation d'ensemble du produit en uniformisant l'aspect de ses différentes faces.

En l'absence d'un revêtement sur la seconde face du panneau, une feuille de papier peut être appliquée pour améliorer la manipulation des produits. Cette feuille, faiblement adhérente, est retirée lors de la mise en place.

Le revêtement 14 recouvre les faces longitudinales latérales du matelas et sont rabattus sur des portions marginales de la face arrière de ce dernier.

## Revendications

1. Panneau résistant au feu classé en classe M0, selon la norme NF P92501, du type comprenant un matelas en fibres minérales (10) et un revêtement (12, 14) collé sur la face destinée à être apparente du matelas et, éventuellement, sur ses chants longitudinaux et des portions marginales de l'autre face du matelas, **caractérisé en ce que** le revêtement comprend un voile en fibres de verre (12) collé à la face à revêtir du matelas et une feuille d'aluminium (18) liée au voile au moyen d'une couche de colle (16) réactivable à la chaleur, l'épaisseur de la feuille d'aluminium étant comprise entre 20 et 150 micromètres, et le diamètre moyen des fibres étant de l'ordre de 3 à 4 micromètres.

2. Panneau selon la revendication 1, **caractérisé en ce que** la feuille d'aluminium, dont l'épaisseur est comprise entre 40 et 150 micromètres, a un aspect gaufré.

3. Panneau selon la revendication 1, **caractérisé en ce que** la feuille d'aluminium est enduite d'une couche de laque (20).

4. Panneau selon la revendication 1, **caractérisé en ce que** la colle (16) réactivable à la chaleur est une colle polyéthylène ayant un grammage de 10 à 50 g/m².

5. Panneau selon la revendication 1, **caractérisé en ce que** le voile (12) en fibres de verre a un grammage de 35 à 180 g/m².

6. Panneau selon la revendication 1, **caractérisé en ce que** le matelas (10) a une densité de 15 à 80 kg/m³ pour une épaisseur comprise entre 10 et 100 mm et ses fibres sont liées entre elles par un liant organique polymérisable intervenant dans une proportion de 3 à 7 % par rapport au poids des fibres.

7. Panneau selon la revendication 1, **caractérisé en ce que** le matelas de laine minérale (10) est pourvu d'un revêtement dorsal (22) en voile de fibres de verre.

8. Panneau selon la revendication 1, **caractérisé en ce que** le revêtement (14) recouvre les faces longitudinales latérales du matelas et sont rabattus sur des portions marginales de la face arrière de ce dernier.

## Claims

1. Fire-resistant panel classified in class MO, according to the standard NF P92501, of the type comprising a mattress of mineral fibres (10) and a covering (12, 14) adhesively bonded to that face of the mattress which is to be visible and, optionally, to its longitudinal edges and marginal portions of the other face of the mattress, characterised in that the covering comprises a veil of glass fibres (12) adhesively bonded to that face of the mattress which is to be covered and an aluminium sheet (18) connected to the veil by means of a heat-reactive layer of adhesive (16), the thickness of the aluminium sheet being between 20 and 150 micrometres, and the average diameter of the fibres being of the order of from 3 to 4 micrometres.

2. Panel according to claim 1, characterised in that the aluminium sheet whose thickness is between 40 and 150 micrometres has an embossed appearance.

3. Panel according to claim 1, characterised in that the aluminium sheet is coated with a layer of lacquer (20).

4. Panel according to claim 1, characterised in that the heat-reactive adhesive (16) is a polyethylene adhesive having a basis weight of from 10 to 50 g/m².

5. Panel according to claim 1, characterised in that the veil (12) of glass fibres has a basis weight of from 35 to 180 g/m².

6. Panel according to claim 1, characterised in that the mattress (10) has a density of from 15 to 80 kg/m³ for a thickness of between 10 and 100 mm and its fibres are connected to one another by a polymerisable organic binder present in a proportion of from 3 to 7% relative to the weight of the fibres.

7. Panel according to claim 1, characterised in that the mineral wool mattress (10) is provided with a backing (22) comprising a veil of glass fibres.

8. Panel according to claim 1, characterised in that the covering (14) covers the lateral longitudinal faces of the mattress and are folded over marginal portions of the rear face of the mattress.

## Patentansprüche

1. Platte mit einer Feuerbeständigkeits-Klassifizierung in Klasse M0 gemäß der Norm NF P92501, von der Art mit einer Mineralfasermatte (10) und einer Kaschierung (12, 14), die auf der als Sichtseite vorgesehenen Hauptfläche sowie gegebenenfalls auf den Längsschmalseiten und den Randabschnitten der weiteren Hauptfläche aufgeklebt ist, **dadurch gekennzeichnet**, daß die Kaschierung einen Glasfaserschleier (12) aufweist, der auf die zu kaschierende Hauptfläche der Matte aufgeklebt ist, sowie eine Aluminiumfolie (18), die mittels einer Schicht aus einem in Wärme reaktivierbaren Klebstoff (16) mit dem Schleier verbunden ist, wobei die Dicke der Aluminiumfolie zwischen 20 und 150 µm und der mittlere Durchmesser der Fasern in der Größenordnung von 3 bis 4 µm liegt.

2. Platte nach Anspruch 1, **dadurch gekennzeichnet, daß** die Aluminiumfolie, deren Dicke zwischen 40 und 150 µm liegt, ein mustergewalztes Aussehen aufweist.

3. Platte nach Anspruch 1, **dadurch gekennzeichnet, daß** die Aluminiumfolie mit einer Lackschicht (20) überzogen ist.

4. Platte nach Anspruch 1, **dadurch gekennzeichnet, daß** der in Wärme reaktivierbare Klebstoff (16) ein Polyethylenkleber mit einer flächenbezogenen Masse von 10 bis 50 g/m² ist.

5. Platte nach Anspruch 1, **dadurch gekennzeichnet, daß** der Glasfaserschleier (12) eine flächenbezogene Masse von 35 bis 180 g/cm² aufweist.

6. Platte nach Anspruch 1, **dadurch gekennzeichnet, daß** die Matte (10) eine Dichte von 15 bis 80 kg/m³ sowie eine zwischen 10 und 100 mm liegende Dicke aufweist, und daß ihre Fasern mittels eines polymerisierbaren organischen Bindemittels, das in einem Anteil von 3 bis 7% in Bezug auf das Gewicht der Fasern vorliegt, untereinander gebunden sind.

7. Platte nach Anspruch 1, **dadurch gekennzeichnet, daß** die Mineralfasermatte (10) mit einer rückwärtigen Kaschierung (22) aus Glasfaserschleier versehen ist.

8. Platte nach Anspruch 1, **dadurch gekennzeichnet, daß** die Kaschierung (14) die seitlichen Längsflächen der Matte bedecken und über Randabschnitte der rückwärtigen Hauptfläche der Matte umgeschlagen sind.
